# EUROPÄISCHE PATENTANMELDUNG

(11) **EP 1 607 208 A1**
(43) Veröffentlichungstag der Anmeldung: **21.12.2005**
(21) Anmeldenummer: 05104537.5
(22) Anmeldetag: 27.05.2005
(51) Int. Cl.: B29C 49/22, B32B 27/08, B65D 65/40, B65D 1/02, B32B 1/02

(54) **Mehrschichtige dickwandige Kunststoffflasche**

(30) Priorität: 28.05.2004 DE 202004008706 U; 14.08.2004 DE 202004012765 U; 26.10.2004 DE 202004016590 U; 29.11.2004 DE 202004018510 U; 20.05.2005 DE 202005008172 U
(71) Anmelder: CROWN Raku GmbH, 76437 Rastatt (DE)
(72) Erfinder: Blettermann, René, 76479 Steinmauern (DE)
(74) Vertreter: Rieder, Hans-Joachim

(57) **Zusammenfassung**

Die Erfindung betrifft eine mehrschichtige dickwandige Kunststoffflasche, vorzugsweise Kosmetikmittel-Kunststoffflasche (1), mit einer glasähnlichen dickwandigen Hauptschicht (4), bestehend aus Copolymeren aus Ethylen und Metacrylester-Säure (E/MAA) oder PET, speziell ein PET-G, und einer innenseitig der Hauptschicht (4) angeordnete, im Koextrusions-Blasverfahren gebildeten Färbungsschicht (7). Um eine vorteilhafte mehrschichtige dickwandige Kunststoffflasche anzugeben, die möglichst universell einsetzbar ist, ist erfindungsgemäß eine weiter innenseitig der Hauptschicht (4) ausgebildete Schutzschicht (6) im Hinblick auf flüchtige Substanzen wie Alkohol vorgesehen.

## Beschreibung

Die Erfindung betrifft eine mehrschichtige dickwandige Kunststoffflasche, vorzugsweise Kosmetikmittel-Kunststoffflasche, mit einer glasähnlichen dickwandigen Hauptschicht. Die Hauptschicht kann aus Copolymeren aus Ethylen und Metacrylester-Säure (E/MAA) bestehen oder auch aus einem PET, nämlich speziell einem PET-G. Innenseitig der Hauptschicht ist eine im Koextrusions-Blasverfahren gebildete Färbungsschicht angeordnet.

Die Erfindung betrifft auch eine im Koextrusionsverfahren hergestellte mehrschichtige dickwandige Kunststoffflasche, vorzugsweise für den Kosmetikbereich, aber auch etwa für den Lebensmittelbereich, mit einer dickwandigen Hauptschicht bestehend aus einem transparenten Polypropylen oder einem transparenten Polyethylen und einer innenseitig der Hauptschicht angeordneten weiteren, gefärbten Schicht. Auch bezüglich dieses weiteren Gegenstandes kann aber auch hinsichtlich der Hauptschicht eine Werkstoffwahl getroffen sein, wie sie im vorstehenden Absatz beschrieben ist.

Derartige mehrschichtige dickwandige Kunststoffflaschen sind interner Stand der Technik der Anmelderin. Solche mehrschichtigen dickwandigen Kunststoffflaschen haben eine glasähnliche Erscheinungsform. Dadurch, dass die Färbungsschicht innenseitig angeordnet ist, ergibt sich beispielsweise dann, wenn man nicht frontal auf eine solche Flasche schaut, sondern leicht schräg, am Rand ein visueller Eindruck eines äußerlich glasklaren Behältnisses und eines innenseitig gefärbten Wandungsbestandteils.

Bezüglich derartiger Kunststoffflaschen ergibt sich nun das Bedürfnis einer Weiterentwicklung in verschiedenen Richtungen. Zum einen sind derartige Kunststoffflaschen in ihren bislang (intern) bekannten Ausgestaltungen nicht universell einsetzbar. Insbesondere bestehen Schwierigkeiten im Hinblick auf flüchtige Bestandteile in Flüssigkeiten, wie etwa Alkohol, da diese nicht zurückgehalten werden können.

Andererseits, gegebenenfalls auch kombiniert, ist an einer weiteren Verbesserung der Erscheinungsform gelegen.

Ausgehend von dem dargelegten Stand der Technik beschäftigt sich die Erfindung mit der Aufgabe, eine vorteilhafte mehrschichtige dickwandige Kunststoffflasche anzugeben. In weiterer Einzelheit ist auch angestrebt, eine möglichst universell einsetzbare mehrschichtige, dickwandige Kunststoffflasche zu erreichen.

Diese Aufgabe ist zunächst und im Wesentlichen beim Gegenstand des Anspruches 1 gelöst, wobei darauf abgestellt ist, dass innenseitig der Hauptschicht eine Schutzschicht im Hinblick auf flüchtige Substanzen wie Alkohol ausgebildet ist. Es wurde erkannt, dass ohne den beschriebenen, vorteilhaften und gewünschten optischen Eindruck zu beeinträchtigen, dadurch eine höhere universelle Einsetzbarkeit einer solchen Kunststoffflasche erreicht werden kann, dass innenseitig der Hauptschicht noch eine Schutzschicht angebracht wird, vorzugsweise auch extrudiert zusammen mit den weiteren Schichten im Koextrusionsverfahren. Eine solche Schutzschicht kann auch ihrerseits transparent sein, wie es grundsätzlich die Hauptschicht ist und vorzugsweise auch die Färbungsschicht. Die Schutzschicht kann in einer ersten Ausführungsform beispielsweise aus EVOH (Ethylen Vinyl Alkohol Copolymer) bestehen. Sie kann auch aus einem HDPE (High Density Polyethylen) oder einen LDPE (Low Density Polyethylen) bestehen. Darüber hinaus kann die Schutzschicht auch aus PP (Polypropylen) bestehen. Die Schutzschicht ist insbesondere in Abhängigkeit davon auszuwählen, welcher konkrete Stoff etwa in der Kunststoffflasche aufgenommen werden soll, da der Schutz gegen flüchtige Bestandteile gerade bei dem genannten LDPE nicht so hoch ist, wie bei den anderen Materialien. Hierbei kann in Kauf genommen werden, dass die PE-basierten Schichten opak, also nicht transparent, sind.

Diese Aufgabe ist im Weiteren auch beim Gegenstand des Anspruches 2 gelöst, wobei dieser insgesamt auf eine solche im Koextrusionsverfahren hergestellte mehrschichtige dickwandige Kunststoffflasche abstellt, bei welcher die innere bzw. weitere Schicht aus einem zu dem Werkstoff der Hauptschicht übereinstimmenden Werkstoff besteht, also beispielsweise beide Schichten aus Polypropylen oder beide Schichten aus Polyethylen bestehen und die innere bzw. weitere Schicht eingefärbt ist und weiter die Hauptschicht gleich dick oder dicker ist als die weitere Schicht und auf der oder in die Hauptschicht ein Schattenwurfmittel an- oder eingebracht ist. Als Schattenwurfmittel können die verschiedensten Mittel eingesetzt werden. Beispielsweise ein außen aufgebrachtes Etikett. Aber auch etwa Partikel, die sich in der Hauptschicht befinden oder aber auch insbesondere eine Ausprägung die auf der Hauptschicht aufgebracht ist oder sich bis in die Hauptschicht fortsetzt.

Dieser weitere Gegenstand erbringt eine in der Anmutung hochwertige, gleichwohl aber kostengünstig herstellbare Kunststoffflasche. Kombiniert mit den genannten Schattenwurfmitteln wird eine optische Tiefenwirkung des Flaschenkörpers erreicht.

Hinsichtlich der weiter vorne angesprochenen Schutzschicht können für die Schutzschicht auch Polyolefine allgemein zum Einsatz kommen. Diese können auch als transparente Schichten eingesetzt werden.

Auch kann die Schutzschicht, gegebenenfalls alternativ, aus einem PA (Polyamid) bestehen.

Die Hauptschicht besteht in der angegebenen ersten Variante aus einem Material, welches auf einem Copolymer aus Ethylen und Metaacrylester-Säure (E/MAA) basiert und ionisiert ist.

Der für die Hauptschicht erwähnte alternative Werkstoff PET-G wird von Firma Eastmann als Variante des an sich bekannten PET (Poly-Ethylenglykol-Terephthalat) vertrieben, speziell unter der Bezeichnung PET-G, GN 046. Es handelt sich hier um Copolyester das hochschmelzstabilisiert ist, also nicht so leicht abreißt nach dem Extrusionsvorgang. Es hat eine Dichte von ca.1,2 bis 1,3 g/cm³ und eine Härte (Rockwell) von ca. 106. Es können Glucolketten in dem Werkstoff enthalten sein, die sich günstig auswirken. Darüber hinaus ist auch ein PT-Werkstoff der Bezeichnung PT-G, EB 062 einsetzbar. Der Werkstoff E/MAA ist insbesondere ein solcher wie er von der Firma DuPont unter dem Handelsnamen Surlyn, speziell Surlyn PC 100, vertrieben wird.

In weiterer Beschreibung kann es sich bei dem Werkstoff der Hauptschicht um einen der folgenden handeln: Polyurethan, Acrylpolymer, Styrenacrylonitrilcopolymer (SAN), Copolymere von Ethylen und Alpha, Betaungesättigten Carboxylsäuren und/oder deren Derivaten, Polyamiden und Polyvinylchloriden. Es kann sich auch allgemein um ein Ionomer handeln.

Im Weiteren kann es sich auch um ein Polymer handeln wie etwa ein Polyester oder ein Polycarbonat. Auch ist ein Polyacetat möglich.

Zwischen der Schutzschicht und der Hauptschicht ist bevorzugt eine Haftvermittlerschicht ausgebildet. Die Färbung kann bei der hier beschriebenen Ausgestaltung der Kunststoffflasche auch sogleich durch die Haftvermittlerschicht erreicht sein. Alternativ oder ergänzend aber auch durch die Schutzschicht. Die Haftvermittlerschicht kann bestehen aus VC VA-MaleinSäure-Copolymerisate, VC-Copolymerisate als solche, polymerisierbare Polyester oder Vinylpyridin-Polymerisate in Kombination mit Epoxydharzen. Besonders bevorzugt ist ein Material wie es von der Firma Mitsui Sekka (Europa) unter der Bezeichnung Admer vertrieben wird.

Zusätzlich zu den vorstehend beschriebenen zwei oder drei Schichten, der Hauptschicht, gegebenenfalls der Haftvermittlerschicht und der Schutzschicht, kann auch noch eine vierte (dritte) Schicht, bevorzugt zwischen der Außenschicht und der Haftvermittlerschicht bzw. zwischen der Außenschicht und der Schutzschicht oder aber auch innenseitig der Schutzschicht, vorgesehen sein. Letzteres jedenfalls dann, wenn die Schutzschicht transparent ist und weder die Schutzschicht noch die Haftvermittlerschicht die Färbung erbringt oder in einem ausreichenden Maße erbringt. Dann ist diese vierte (dritte) Schicht als - gegebenenfalls zusätzliche - Farbschicht vorgesehen. Die vierte Schicht kann auf einem der bereits erwähnten Werkstoffe basieren. Insbesondere kann sie auf Basis Polyethylen oder Polypropylen ausgebildet sein. Mit dieser Kombination können zwei unterschiedliche Schutzschichten mit Barrieren gegen Wasserstoff bzw. Schaumstoff vereint ausgebildet werden, Bspw. bestehend aus PA und EVOH oder aus PE und EVOH oder aus PP und PA.

Insbesondere ist auch bevorzugt, dass die Färbung der Kunststoffflasche mittels einer Effektfarbe vorgenommen wird. Unter Effektfarben werden Farben verstanden wie sie etwa als Metallicfarben, irisierende Farben oder Perlmuttfarben bekannt sind. Hierbei kann eine solche Effektfarbe oberflächlich vorgesehen sein oder aber auch in eine Schicht eingebracht werden. Insbesondere eignet sich hierzu die weitere Schicht und/oder die Schutzschicht und/oder die Haftvermittlerschicht und/oder die Färbungsschicht. Die Färbungsschicht kann insbesondere auch aus einer Effektfarbe als solcher - allein - bestehen.

Als Effektfarben kommen beispielsweise die unter den Handelsnamen Clariant, Remafin, Clariant Remafin braun CEC 133, als metallische Farbe, Clariant Remafin grün PE6300979-Zn als irisierende Farbe oder Clariant Remafin weißperlmutt MS-CE 30, als Perlmuttfarbe, in Frage.

Hinsichtlich der Ausgestaltung mit einem Schattenwurfmittel auf oder in der Außenschicht kann auch vorgesehen sein, dass dieses aus einem Aufdruck besteht.

Insbesondere ist in diesem Zusammenhang bevorzugt, dass die Hauptschicht eine Dicke aufweist, die 50 bis 95 % der Gesamtdicke des Wandaufbaus der Kunststoffflasche entspricht. Die absolute Dicke der Hauptschicht kann bei etwa 0,3 mm beginnen. Sie kann von hier aus ausgehend alle Zwischenstufen, Dezimalen wie 0,4, 0,5 etc. und darüber hinaus auch noch Zwischenwerte, annehmen. Bis hin zu einer Dicke von 3 oder gar 5 mm. Die verbleibende Dicke wird dann durch die weitere Schicht eingenommen. Gegebenenfalls aber auch noch durch eine dritte Schicht, die aus einem geeigneten Haftvermittler besteht. Die dritte Schicht verbindet die Hauptschicht mit der weiteren Schicht, ist also zwischen diesen angeordnet. Diese dritte Schicht ist dann vergleichsweise sehr dünn. Die dritte Schicht kann auch zusätzlich oder alternativ zur weiteren Schicht, dann also: Innenschicht, eingefärbt sein. Die Innenschicht kann auch bei dem dreischichtigen Aufbau eine Barrierefunktion übernehmen. Sie kann aus einem EVOH oder einem Polyamid bestehen.

Hinsichtlich der bei Ausgestaltung mit Schattenwurfmittel ausgebildeten Außenschicht ist insbesondere ein hochtransparentes, bevorzugt nukleiertes Copolymer auf Polypropylenbasis bevorzugt. Beispielsweise ein unter dem Handelsnamen Borealis RB477MO oder RB307MO bekannte Polypropylen. Auch hierbei kann die Hauptschicht die Absolutwerte hinsichtlich Dicke einnehmen, wie sie in vorstehendem Absatz aufgeführt sind.

Nachstehend ist die Erfindung des Weiteren anhand der beigefügten Zeichnung, die jedoch lediglich ein Ausführungsbeispiel darstellt, erläutert. Hierbei zeigt:
- Fig. 1: eine schematische Ansicht von außen einer Kosmetikmittel-Kunststoffflasche;
- Fig. 2: einen Querschnitt durch die Wandung der Kosmetik-Kunststoffflasche geschnitten entlang der Linie II-II in Fig. 1;
- Fig. 3: eine Draufsicht auf den Gegenstand gemäß Fig. 1;
- Fig. 4: eine Darstellung gemäß Fig. 2, betreffend eines alternativen Wandaufbaus;
- Fig. 5: eine Darstellung entsprechend Fig.1, jedoch bezüglich der Ausführungsform mit Schattenwurfmittel;
- Fig. 6: eine Herausvergrößerung aus Fig. 5 entsprechend VI; und
- Fig. 7: einen Querschnitt durch den Gegenstand gemäß Fig. 5 entlang der Linie VII-VII.

Dargestellt und beschrieben ist mit Bezug zu der beigefügten Zeichnung eine Kosmetik-Kunststoffflasche 1, die in an sich bekannter Weise mit einem Schraubhals 2 für einen (im Einzelnen nicht dargestellten) Drehverschluss ausgebildet ist

Die Kosmetik-Kunststoffflasche 1 weist eine dickwandige Wandung 3 auf. Die Dicke der Wandung kann zusammengefasst zwischen 3 und 5 mm liegen, bevorzugt bei etwa 4 mm .

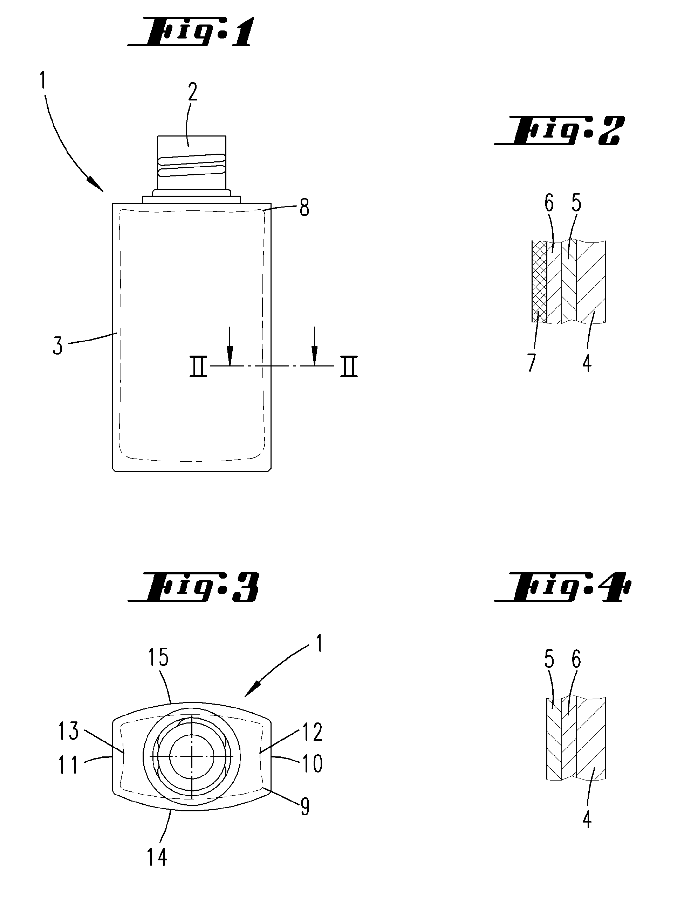

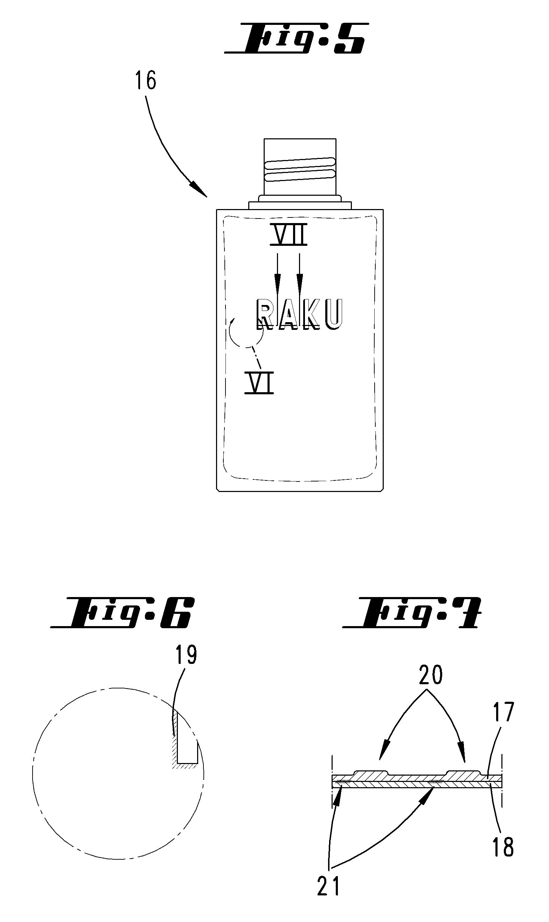

Der Aufbau der Wandung ist in einer ersten Ausgestaltung in weiterer Einzelheit Fig. 2 zu entnehmen.

Als äußerste Schicht ist die Hauptschicht 4 vorgesehen, die beim Ausführungsbeispiel eine Dicke von 4 mm aufweist. Sie kann auch dünner oder dicker sein, etwa zwischen 3 und 5 mm liegen.

Innenseitig der Hauptschicht 4 ist eine Haftvermittlerschicht 5 angeordnet. Weiter innenseitig eine Schutzschicht 6 aus EVOH. Darüber hinaus ist eine weitere innenseitige Färbungsschicht 7 vorgesehen, welche die Färbung durch die Haftvermittlerschicht 5 unterstützt. Dies betrifft konkret das Ausführungsbeispiel. Es kann auch die Färbung der Haftvermittlerschicht 5 allein schon ausreichend sein. Bei einer Variante dieses Ausführungsbeispiels kann im Übrigen dann auch die Haftvermittlerschicht farblos gestaltet sein und allein durch die Färbungsschicht 7 die Färbung erreicht sein.

Beim Ausführungsbeispiel sind alle vier Schichten transparent. Insbesondere ist die Hauptschicht 4 glasartig - farblos - transparent ausgebildet.

Die Haftvermittlerschicht kann eine Dicke im Bereich von 0,01 bis 0,05 mm aufweisen, während die Schutzschicht etwa im Bereich von 0,03 bis 0,09, bevorzugt etwa mit 0,06 mm Dicke ausgebildet sein kann.

Die hier angegebenen Wandstärken beziehen sich auf mittlere Wandstärken. Insbesondere bei im Querschnitt nicht runden Behältnissen, wie hier beim Ausführungsbeispiel, und/oder am Übergang von einer vertikal sich erstreckenden Wandung in einer horizontal sich erstreckende Wandung (Boden) oder am Übergang zu einer Halsausformung können hier Abweichungen (meistens: geringere Wandstärken) auftreten.

Das beschriebene Ausführungsbeispiel, vgl. Fig. 3, hat einen ovalartigen Grundriss, aber mit gerade verlaufenden Schmalseitenflächen.

Sowohl in Fig.1 wie in Fig. 3 ist durch eine strichpunktierte innere Linie die innere Begrenzung der Hauptschicht 4 angedeutet. Diese wirkt sich optisch aus, da bei der angegebenen Schrägansicht oder auch in der Draufsicht sich in den Eckbereichen, aber auch in den übrigen Wandungsbereichen, Bereiche abzeichnen, die glasartig hell und durchsichtig sind, gegenüber der inneren Färbung, bspw. Blaufärbung. Insbesondere ist der Wandungsverlauf auch, wie sich in den Eckbereichen 8 und 9 in den dargestellten Ausführungsbeispielen ergibt, in der angegebenen Weise gerundet ausgebildet, mit, insbesondere an den Schmalseiten 10,11 demgegenüber nach innen vorwölbenden, Abschnitten 12,13. Ein solcher Effekt ergibt sich allerdings auch, wenn auch in weit geringerem Maße, an den Ovalseiten 14,15.

Bei dem alternativen Wandaufbau gemäß Fig. 4 ist die Schutzschicht 6 zwischen der Hauptschicht 4 und der Haftvermittlerschicht 5 angeordnet. Auf eine Färbungsschicht ist vollkommen verzichtet. Die Färbung ist allein durch die Haftvermittlerschicht 5 übernommen.

Im Hinblick auf eine Ausgestaltung mit Schattenwurfmittel ist auf die Fig. 5 bis 7 Bezug genommen. In Fig. 5 ist ein entsprechendes Gefäß, eine Kunststoffflasche 16, grundsätzlich in der Darstellung entsprechend Fig.1, dargestellt.

Ersichtlich ist - zugleich in diesem Fall das Schattenwurfmittel darstellend - auf der Vorderseite ein Schriftzug aufgebracht, hier in breiten Strichen aufgedruckt.

Aufgrund der besonderen Ausgestaltung des Wandaufbaus, wie er sich etwa aus Fig. 7 - wenn auch dort die Spezialität der Ausprägung im Einzelnen darüber hinaus dargestellt ist - ergibt, ist bei einem Aufdruck auf die Außenseite aufgrund der transparenten Hauptschicht 17 und der eingefärbten weiteren Schicht 18 ein Schattenwurf 19, der zeichnerisch auch versucht wurde in Fig. 6 darzustellen, gegeben. Wenn man auch mit dem Auge an sich den Schattenwurf 19 nicht bewusst erkennt, ergibt sich doch eine eigenartige, unterlegte Erscheinungsform eines entsprechenden Aufdrucks in Buchstaben, wie er in Fig. 5 wiedergegeben ist.

Optisch stellt sich hiermit eine gewünschte Tiefenwirkung ein, die zu einer vorteilhaft hochwertigen Anmutung der so hergestellten und ausgerüsteten Kunststoffflasche 16 führt.

Wie in Fig. 7 im Einzelnen versucht wurde darzustellen, kann der Schattenwurf auch allein durch eine entsprechende Ausprägung 20 erreicht sein. Hierbei ist aufgrund der Prägung und der sich hierbei ergebenden Lichtbrechungen schon der Schattenwurf 21 indiziert. Wesentlich ist, dass sich aufgrund einer in der Regel gegebenen nur geringen Breite der Ausprägung 20 die weitere Schicht 18 nicht ausprägt. Sie ist vielmehr unbeeinflusst. Diese eingefärbte Schicht 18 läuft innen glatt durch, was zusätzlich zu dem gewünschten Effekt beiträgt.

Weiter alternativ können auch Partikel in der hochtransparent eingestellten Hauptschicht 17 etwa angeordnet sein. Es kann auch ein sogenanntes "in mould labeling" vorgesehen sein.

Alle offenbarten Merkmale sind (für sich) erfindungswesentlich. In die Offenbarung der Anmeldung wird hiermit auch der Offenbarungsinhalt der zugehörigen/beigefügten Prioritätsunterlagen (Abschrift der Voranmeldung) vollinhaltlich mit einbezogen, auch zu dem Zweck, Merkmale dieser Unterlagen in Ansprüche vorliegender Anmeldung mit aufzunehmen.

## Patentansprüche

1. Mehrschichtige dickwandige Kunststoffflasche, vorzugsweise Kosmetikmittel-Kunststoffflasche (1), mit einer glasähnlichen dickwandigen Hauptschicht (4), bestehend aus Copolymeren aus Ethylen und Metacrylester-Säure (E/MAA) oder PET, speziell ein PET-G, und einer innenseitig der Hauptschicht (4) angeordnete, im Koextrusions-Blasverfahren gebildeten Färbungsschicht (7), **gekennzeichnet durch** eine weiter innenseitig der Hauptschicht (4) ausgebildete Schutzschicht (6) im Hinblick auf flüchtige Substanzen wie Alkohol.

2. Im Koextrusionsverfahren hergestellte mehrschichtige dickwandige Kunststoffflasche (16), vorzugsweise Kosmetikmittel-Kunststoffflasche, aber auch ggf. Lebensmittel-Kunststoffflasche, mit einer dickwandigen Hauptschicht (17), bestehend aus einem transparenten Polypropylen oder einem transparenten Polyethylen, und einer innenseitig der Hauptschicht (17) angeordneten weiteren Schicht (18), wobei die weitere Schicht (18) aus einem zu dem Werkstoff der Hauptschicht (17) übereinstimmenden Werkstoff besteht und eingefärbt ist, wobei darüber hinaus die Hauptschicht (17) gleich dick oder dicker ist als die weitere Schicht (18) und oder auf in der als Außenschicht ausgebildeten Hauptschicht (17) ein Schattenwurfmittel angebracht ist.

3. Kunststoffflasche nach einem oder mehreren der vorhergehenden Ansprüche oder insbesondere danach, **dadurch gekennzeichnet, dass** die Schutzschicht (6) aus EVOH besteht.

4. Kunststoffflasche nach einem oder mehreren der vorhergehenden Ansprüche oder insbesondere danach, **dadurch gekennzeichnet, dass** die Schutzschicht (6) aus HDPE besteht.

5. Kunststoffflasche nach einem oder mehreren der vorhergehenden Ansprüche oder insbesondere danach, **dadurch gekennzeichnet, dass** die Schutzschicht (6) aus LDPE besteht.

6. Kunststoffflasche nach einem oder mehreren der vorhergehenden Ansprüche oder insbesondere danach, **dadurch gekennzeichnet, dass** die Schutzschicht (6) aus PA besteht.

7. Kunststoffflasche nach einem oder mehreren der vorhergehenden Ansprüche oder insbesondere danach, **dadurch gekennzeichnet, dass** die Schutzschicht (6) aus PP besteht.

8. Kunststoffflasche nach einem oder mehreren der vorhergehenden Ansprüche oder insbesondere danach, **dadurch gekennzeichnet, dass** zwischen der Schutzschicht (6) und der Hauptschicht (4) eine Haftvermittlerschicht (5) angeordnet ist.

9. Kunststoffflasche nach einem oder mehreren der vorhergehenden Ansprüche oder insbesondere danach, **dadurch gekennzeichnet, dass** zwischen einer Haftvermittlerschicht (5) und der Hauptschicht (4) eine Schutzschicht (6) angeordnet ist.

10. Kunststoffflasche nach einem oder mehreren der vorhergehenden Ansprüche oder insbesondere danach, **dadurch gekennzeichnet, dass** innenseitig der Schutzschicht (6) eine Färbungsschicht (7) angeordnet ist.

11. Kunststoffflasche nach einem oder mehreren der vorhergehenden Ansprüche oder insbesondere danach, **dadurch gekennzeichnet, dass** die Färbung durch die Schutzschicht (6) und/oder die Haftvermittlerschicht (5) und/oder die Färbungsschicht (7) erreicht ist.

12. Kunststoffflasche nach einem oder mehreren der vorhergehenden Ansprüche oder insbesondere danach, **dadurch gekennzeichnet, dass** die weitere Schicht (18) und/oder die Schutzschicht (6) und/oder die Haftvermittlerschicht (5) und/oder die Färbungsschicht (7) mit einer Effektfarbe versehen sind oder - Färbungsschicht - aus dieser bestehen.

13. Kunststoffflasche nach einem oder mehreren der vorhergehenden Ansprüche oder insbesondere danach, **dadurch gekennzeichnet, dass** die Effektfarbe eine Metallfarbe oder eine irisierende Farbe oder eine Perlmuttfarbe ist.

14. Kunststoffflasche nach einem oder mehreren der vorhergehenden Ansprüche oder insbesondere danach, **dadurch gekennzeichnet, dass** die Hauptschicht (17) eine Dicke aufweist, die 50 bis 95 % der Gesamtdicke des Wandaufbaus der Kunststoffflasche entspricht.

15. Kunststoffflasche nach einem oder mehreren der vorhergehenden Ansprüche oder insbesondere danach, **dadurch gekennzeichnet, dass** das Schattenwurfmittel aus einem Etikett besteht.

16. Kunststoffflasche nach einem oder mehreren der vorhergehenden Ansprüche oder insbesondere danach, **dadurch gekennzeichnet, dass** das Schattenwurfmittel aus einer Ausprägung (20) besteht.

17. Kunststoffflasche nach einem oder mehreren der vorhergehenden Ansprüche oder insbesondere danach, **dadurch gekennzeichnet, dass** die Ausprägung (20) nur in der Hauptschicht (17) ausgebildet ist.

18. Kunststoffflasche nach einem oder mehreren der vorhergehenden Ansprüche oder insbesondere danach, **dadurch gekennzeichnet, dass** das Schattenwurfmittel aus einem Aufdruck besteht.
